(19) Europäisches Patentamt
European Patent Office
Office européen des brevets

(11) Publication number: 0 067 647 B1

(12) EUROPEAN PATENT SPECIFICATION

(45) Date of publication of patent specification: 18.09.85

(51) Int. Cl.[4]: C 08 G 73/02, C 02 F 1/56

(21) Application number: 82302948.3

(22) Date of filing: 08.06.82

# (54) Cationic polymer flocculant.

(30) Priority: 09.06.81 JP 88731/81

(43) Date of publication of application: 22.12.82 Bulletin 82/51

(45) Publication of the grant of the patent: 18.09.85 Bulletin 85/38

(84) Designated Contracting States: BE DE FR GB NL

(56) References cited: US-A-4 155 847

(73) Proprietor: KYORITSU YUKI CO. LTD.
13-15 Ginza 7-chome
Chuo-ku Tokyo (JP)

(73) Proprietor: MITSUBISHI CHEMICAL INDUSTRIES LIMITED
5-2, Marunouchi 2-chome Chiyoda-ku
Tokyo 100 (JP)

(72) Inventor: Tanaka, Katsutoshi
2-6-18 Honson Chigasaki-shi
Kanagawa-ken (JP)
Inventor: Takeda, Hisao
4-2923-26 Iriya Zama-shi
kanagawa-ken (JP)
Inventor: Kawano, Mutsumi
1301-6 Kagawa Chigasaki-shi
Kanagawa-ken (JP)
Inventor: Miyahara, Isao
2296 Ichinomiya Samukawa-machi
Koza-gun Kanagawa-ken (JP)

(74) Representative: Woods, Geoffrey Corlett et al
J.A. KEMP & CO. 14 South Square Gray's Inn
London WC1R 5EU (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 067 647 B1

## Description

The present invention relates to a cationic polymer flocculant having excellent stability.

Formerly, the present inventors had found that a polymer substance having quarternary ammonium groups obtained by polycondensation of an epihalohydrin and Mannich reaction products of a monohydric phenol, that is amines mainly comprising phenol derivatives having dialkylaminomethyl groups which have been introduced into the monohydric phenol by reacting a dialkylamine and formaldehyde with the epihalohydrin, had an excellent flocculation capability. They then proposed a cationic polymer flocculant comprising the thus obtained poly-condensate (refer to Japanese Patent Application Laying Open No. 35185/79 which corresponds to U.S. Patent No. 4,155,847).

However, there is a tendency for the molecular weight of the above-mentioned polycondensate to reduce with the passage of time. This is due to the break down of the main chain of the polycondensate. Consequently, the amount of polymeric cation as determined by colloid titration gradually reduced. This resulted in a tendency for the performance of the polycondensate as a polymer flocculant to be reduced also.

For instance, the polycondensate of epichlorohydrin and Mannich reaction products obtained by reacting three moles of formaldehyde and three moles of dimethylamine with one mole of phenol showed a conspicuous break down of the polymer molecule, particularly in an aqueous solution at a high temperature and at a low concentration. For example, after keeping a 0.5% aqueous solution of the polycondensate at 50°C for one day, the amount of polymeric cations was reduced to 38% by mole of the original amount.

Although trials have been carried out to quaternize a part of the dialkylaminomethyl groups with lower alkyl halide in order to prevent the deterioration of the polycondensate this has the demerit of complicating the reaction steps.

The present inventors have found that polycondensates of an epihalohydrin and a mixture containing Mannich reaction product of a monohydric phenol and of a bisphenol at a specified ratio are excellent as flocculants and are less susceptible to deterioration, that is reduction of molecular weight.

Accordingly, the present invention provides a polycondensate, suitable for use as a cationic polymer flocculant, of (i) an epihalohydrin, (ii) a reaction product of a monohydric phenol with formaldehyde and a dialkylamine of two to six carbon atoms and (iii) a reaction product of a bisphenol with formaldehyde and a dialkylamine of two to six carbon atoms, the molar ratio of (ii):(iii) being from 90:10 to 50:50, preferably 85:15 to 50:50.

A preferred cationic polymer flocculant according to the present invention is a polycondensate of (i) an epichlorohydrin, (ii) a reaction product of phenol with formaldehyde and dimethylamine and (iii) a reaction product of 2,2-bis(4-hydroxyphenyl)propane with formaldehyde and dimethylamine, the molar ratio of (ii):(iii) being from 90:10 to 50:50.

The invention also provides a process for flocculating floculatable substances contained in industrial effluent, which comprises adding to said effluent an effective amount of flocculant comprising a polycondensate of the present invention.

The monohydric phenol for use as a starting material includes phenol and derivatives of phenol having a lower alkyl group of one to three carbon atoms on the benzene ring, such as cresol. Phenol is preferably used. The bisphenol starting material is an alkylidenediphenol. The bisphenol may be 2,2-bis(4-hydroxyphenyl)propane [so-called bisphenol A] or 2,2-bis(4-hydroxyphenyl)butane [so-called bisphenol B]. Bisphenol A is preferably used. The reaction of the monohydric phenol or bisphenol with formaldehyde and a di-loweralkylamine is known as Mannich reaction. The Mannich reaction involving the monohydric phenol can be carried out by known methods. The reaction may be carried out by either adding the dialkylamine or formaldehyde to the phenol followed by the formaldehyde or dialkylamine respectively, or by reacting the dialkylamine with formaldehyde and adding this reaction mixture to the phenol [see "Organic Reactions Vol. I" (published by John Wiley & Sons in 1942)]. The Mannich reaction for the bisphenol can also be carried out in the same manner.

In order to obtain a mixture of (ii) the Mannich reaction products of monohydric phenol and (iii) the Mannich reaction products of bisphenol at a predetermined ratio, both the monohydric phenol and bisphenol as starting materials can be used in predetermined molar ratios.

The Mannich reaction product (ii) of the monohydric phenol and the Mannich reaction product (iii) of the bisphenol may be separately made and then mixed together. Alternatively, the monohydric phenol can be mixed with the bisphenol and then this mixture is brought into reaction to obtain the mixed products of the Mannich reaction.

Since the monohydric phenol has at most three active hydrogen atoms per molecule, the Mannich reaction may occur with at most 3 moles of formaldehyde and three moles of dialkylamine per mole of monohydric phenol.

On the other hand, since the bisphenol has four active hydrogen atoms per molecule, the Mannich reaction may occur with at most four moles of formaldehyde and four moles of dialkylamine to per mole of bisphenol. The amount of formaldehyde and the amount of dialkylamine introduced in the Mannich reaction may be in the range of equimolar to trimolar with respect to the monohydric phenol and may be in the range of equimolar to tetramolar with respect to the bisphenol. However, considering the ease of the

polycondensation with epihalohydrin in the next step, it is preferable to introduce more than two moles of formaldehyde and more than two moles of dialkylamine per mole of monohydric phenol or bisphenol respectively.

In the case where a mixture of monohydric phenol and bisphenol are used for the Mannich reaction, the moles of formaldehyde and dialkylamine to be introduced are preferably as follows:

$$2X + 2Y \leqq M^1 \leqq 3X + 4Y, \text{ and}$$
$$2X + 2Y \leqq M^2 \leqq 3X + 4Y$$

wherein X, Y, $M^1$ and $M^2$ respectively represent the molar amounts of monohydric phenol, bisphenol, formaldehyde and dialkylamine.

Although formaldehyde and dialkylamine are used at about an equimolar ratio, one of them may be used in a little excess of the other. Instead of formaldehyde, a substance which generates formaldehyde such as paraformaldehyde may be used. As the dialkylamine, amines having a lower alkyl group of one to three carbon atoms are suitable. Dimethylamine, ethylmethylamine and diethylamine are preferable because of their reactivity. In addition, it is possible to use more than one of these amines in combination.

As has been stated, the molar ratio of monohydric phenol to bisphenol is in the range of 90/10 to 50/50. In the case where the bisphenol is less than 10 mole %, the reduction of the polymeric cation cannot be sufficiently suppressed. On the other hand, in the case of over 50 mole %, it is economically unfavorable because the price of the bisphenol is relatively high. Preferably the molar ratio is 85/15 to 50/50.

Although the temperature of the Mannich reaction can be from 10 to 80°C, since at a lower temperature a longer reaction time is necessary and at a higher temperature, the dissipation by evaporation of dialkylamine and by-product formation are apt to occur, it is ordinarily preferable to carry out the reaction at 30 to 60°C for 3 to 6 hours.

As the reaction solvent, water is ordinarily used. If necessary, an organic solvent miscible with water may be used.

In Mannich reaction, one to three dialkylaminomethyl groups are introduced at the ortho- and/or para-positions with respect to the hydroxy group of the monohydric phenol as is shown in the following formula (a), and one to four dialkylaminomethyl groups are introduced into the positions ortho-with respect to the two hydroxy groups of bisphenol as is shown in the following formula (b).

The formula (a):

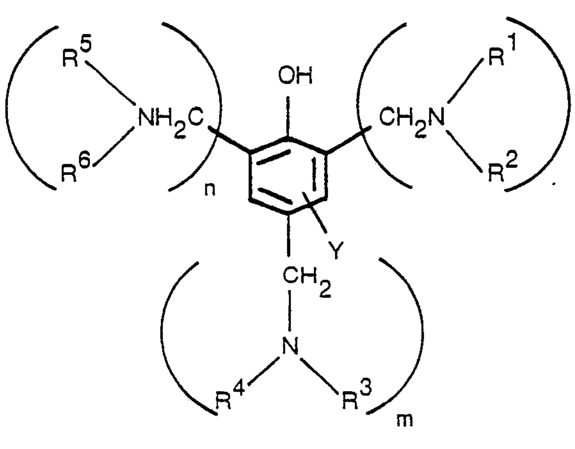

wherein Y represents a hydrogen atom or an alkyl group of one to three carbon atoms, $R^1$ to $R^6$ are the same or different alkyl groups of one to three carbon atoms, and l, m and n represent respectively a number of 0 or 1, provided that l, m and n do not simultaneously represent 0. For example, in the case where m and n represent 0, the formula (a) is shown by the following formula:

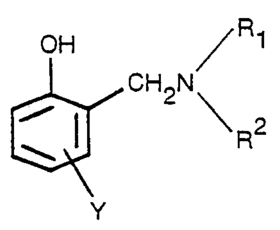

The formula (b):

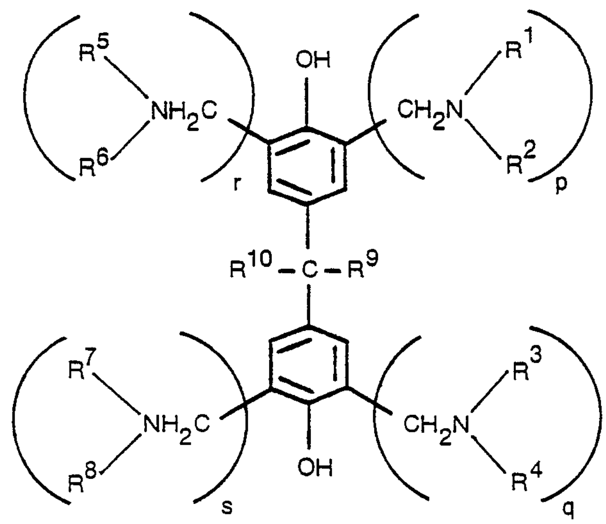

wherein $R^1$ to $R^{10}$ are the same or different alkyl group of one to three carbon atoms and p, q, r and s represent respectively a number of 0 to 1, provided that p, q, r and s do not simultaneously represent 0.

After the Mannich reaction is over, the respective products, i.e. dialkylaminomethylated monohydric phenol and dialkylaminomethylated bisphenol, can be isolated. However, ordinarily, without being isolated they are respectively brought into polycondensation with epihalohydrin.

As the epihalohydrin, epichlorohydrin or epibromohydrin can be mentioned. However, epichlorohydrin is ordinarily used, preferably in an amount of 0.7 to 2 times the molar amount of the sum of the monohydric phenol and the bisphenol. In the case of less than 0.7 times, a polymer having high molecular weight is not obtained. In the case of over twice, networks of three-dimensional structure are formed and the product readily becomes water-insoluble. The reaction temperature of the polycondensation with epihalohydrin is preferably selected from the range of 10 to 90°C. In practice, the controllable temperature range is decided in accordance with the reactivity of the Mannich reaction products obtained by bringing three parts by mole of formaldehyde and three parts by mole of dimethylamine into a Mannich reaction with one part by mole of monohydric phenol and the product obtained by bringing four parts by mole of formaldehyde and four parts by mole of dimethylamine into a Mannich reaction with one part by mole of bisphenol A are highly reactive and, accordingly, it is necessary to carry out polycondensation at a temperature of lower than 40°C where the Mannich reaction product is reacted with an equimolar amount of epichlorohydrin. For instance, in the case of the molar ratio of monohydric phenol and bisphenol is 70:30, reaction for about one hour at 40°C after addition of the epichlorohydrin was sufficient to obtain a polycondensate of sufficiently high molecular weight. In the case of using a mixture of a product obtained by reacting two parts by mole of formaldehyde and two parts by mole of dimethylamine per mole of phenol and a product obtained by reacting two parts by mole of formaldehyde and two parts by mole of dimethylamine per mole of bisphenol A, the polycondensation is desirably carried out at 50°C for 2 hours.

Since polycondensation is exothermic, it is preferable to carry out external cooling or the reaction temperature is preferably controlled by adjusting the rate of addition of the epihalohydrin.

Although the solvent used for the polycondensation is not particularly restricted, the reaction is ordinarily carried out in an aqueous solvent as in the case of a Mannich reaction.

In order to stop the polycondensation, an acid is added to the reaction system at the time when the viscosity of the product has reached a desired value. Generally, the acid may be added at the time when the Brookfield viscosity of the reaction mixture containing 50% by weight of the polycondensate becomes higher than 1 Pa s (1000 cp), preferably, higher than 4 Pa s (4000 cp). No specific acid need be employed. However, a mineral acid such as hydrochloric acid or sulfuric acid is preferably used in an amount which makes the pH of the reaction system less than 7. However, the pH is more preferably reduced to below 4 from the view point of stability of the product.

It is natural that the viscosity of the final product of polycondensation depends on the concentration of the polymer in the resultant reaction mixture, and in the case of concentration of the polymer of 45% by weight, the product showing a Brookfield viscosity of higher than about 0.1 Pa s (100 cp) (intrinsic viscosity, $[\eta]$, of about 0.2 dl/g), more preferably, that showing Brookfield viscosity of higher than 0.8 Pa s (800 cp) (intrinsic viscosity of 0.6 dl/g) is useful as a flocculant.

The thus obtained polycondensate is presumed to have structures shown in the following formulae (I) to (V):

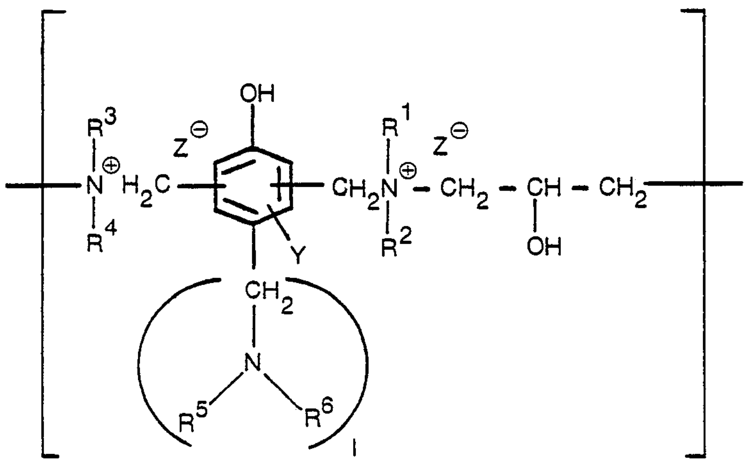

(I)

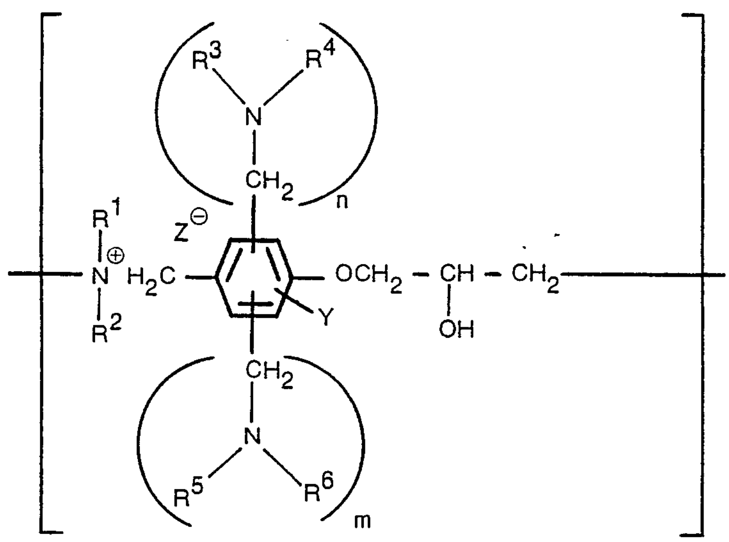

(II)

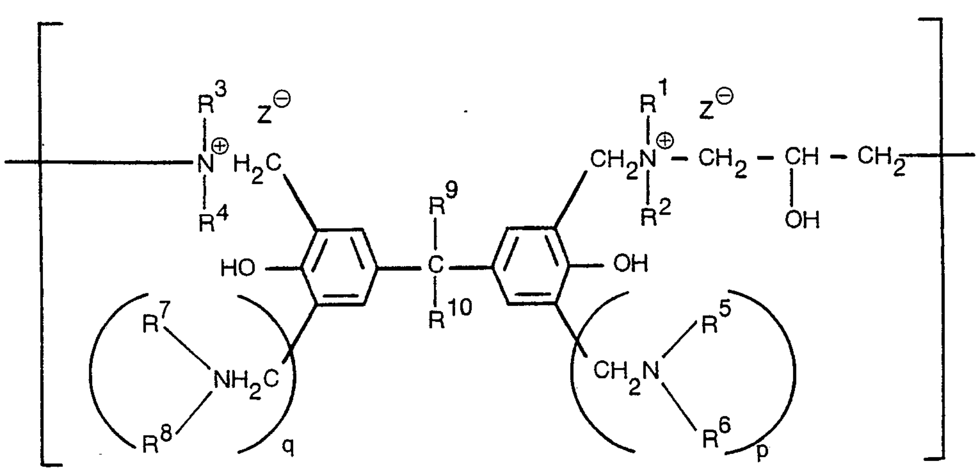

(III)

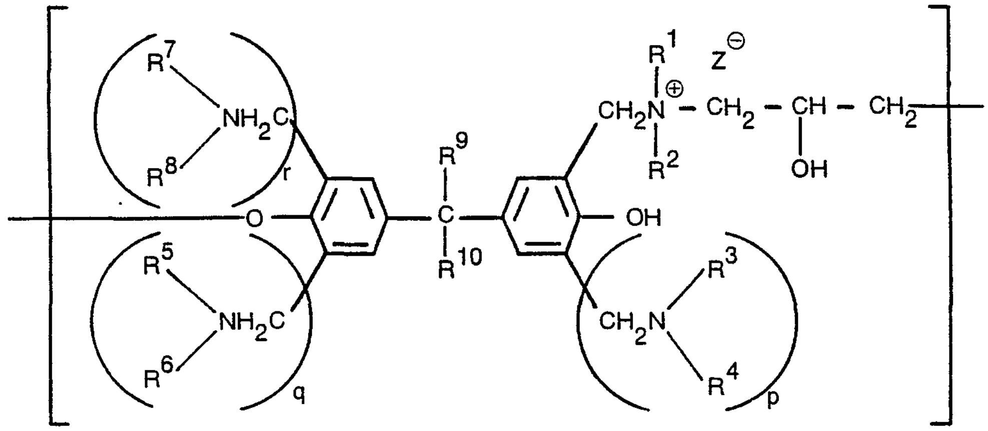

(IV)

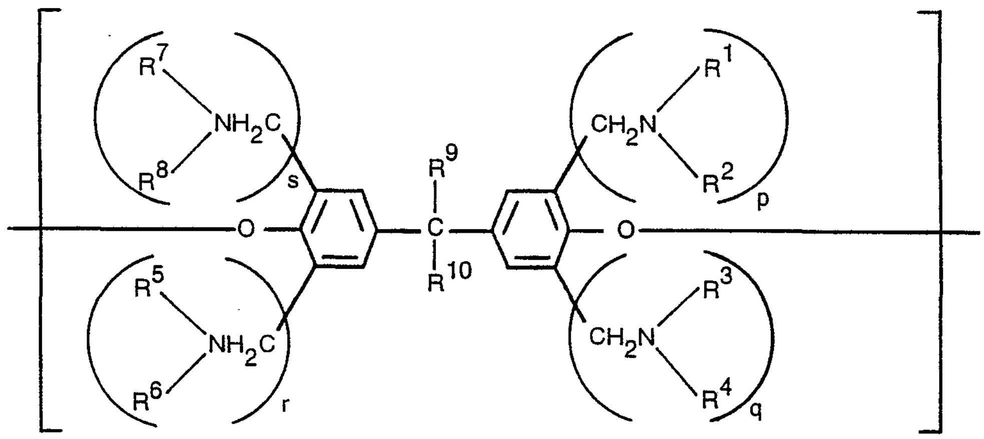

(V)

in which Y, $R^1$ to $R^{10}$, l, m, n, p, q, r and s are as defined previously and Z is a halogen atom.

As will be made clear later in Example 5, the flocculant according to the present invention have polymeric cations deteriorated less than the flocculant produced by only using the product of a Mannich reaction of phenol, and accordingly, it is the preferable flocculant. Although the reason for suppressing the deterioration of the polymeric cations has not been elucidated, it is presumed that one reason is that the bisphenol prevents oxidation of the polymer.

In addition, it is also one of the characteristic features of the present invention that a polymer having high molecular weight is obtained in polycondensation by adding the dialkylaminomethylated product of bisphenol.

It is considered that the larger molecular weight of bisphenol is one of the reasons and that the bisphenol suppresses the break down of the molecular chain caused by the evolution of heat at the time of stopping the polycondensation by the addition of an acid. For instance, in the case where the Mannich reaction products of one part by mole of phenol, three parts by mole of formaldehyde and three parts by mole of dimethylamine are polycondensed with epichlorohydrin and the polycondensation was stopped by hydrochloric acid at a Brookfield viscosity of 7.0 Pa s (7000 cp) of a condensation of polymer of 50% by weight in aqueous solution, the viscosity of the final product of the concentration of 45% by weight in aqueous solution was 0.8 Pa a (800 cp) Brookfield viscosity. On the other hand, in the case where the mixture of the above Mannich reaction products and 15 mole % of the Mannich reaction products of one part by mole of bisphenol and four parts by mole of formaldehyde and four parts by mole of dimethylamine, are polycondensed with epichlorohydrin, the final product showed a viscosity of 3 Pa a (3000 cp) at the concentration of polymer in the aqueous solution of 45% by weight. The temperature of the latter case was the same as in the former case, that is, 25°C.

The flocculants according to the present invention exhibit very good effects when applied, for example, for removal of mud from river water; for acceleration of settlement of sludge in sewage treatment; for dewatering of such sludge; for treatment of oil-containing effluent derived from refining processes in the petrochemical industry; for acceleration of filtration of clay on production of cement; for concentration and filtration of porcelain clay slurry in the ceramic industry; for clarification of effluent from porcelain clay-treating processes; for dewatering of concentrate in the mining industry; for clarification of effluent from quarrying processes and also from coal dressing processes; for clarification of effluent from blast furnaces in the iron and steel industry and in the metal-working industry; for removal and settlement of mud from effluent derived from polishing processes; for settling and floating treatments of washings and oil-containing effluent from casting processes using cupola; for retention aid of dry or wet strength agent, drainage aid, for fixation of size, retention aid of pigment and filler in the paper-making industry, clarification of effluent from paper-making processes and dewatering of the resulting sludge; for clarification of effluent from pulp-making processes; for decolorization and clarification of effluent from deinking processes; for flocculation of various effluents in the food industry; for dewatering of excess sludge from biological treatment process as a floating and settling agent for effluent in the dye industry; for clarification of effluent from the washing of gravel or pebbles and for clarification of effluent containing anionic surfactant or detergent.

In practice the flocculants according to the present invention may be used together with other inorganic and/or organic flocculants. Anionic and/or cationic polyacrylamide flocculants may be used in combination with the flocculants of the invention.

The following Examples illustrate the present invention.

Example 1

32.9 Grams (0.35 moles) of phenol was introduced into a separable flask. 94.5 Grams of an aqueous 50% by weight solution of dimethylamine (corresponding to 1.05 moles) was added to the flask. After adding dropwise 85.1 g of an aqueous 37% by weight solution of formaldehyde (corresponding to 1.05 moles), the reaction system was kept at 55°C while stirring for 4 hours to carry out a Mannich reaction.

In another separable flask, 34.2 g (0.15 moles) of bisphenol A was introduced. After adding 54 g of an aqueous 50% by weight solution of dimethylamine (corresponding to 0.6 moles) and 48.6 g of an aqueous 37% by weight solution of formaldehyde (corresponding to 0.6 moles) to the flask, the reaction system was kept at 55°C while stirring for 4 hours to carry out another run of a Mannich reaction.

After combining both the reaction mixtures, 46.3 g of epichlorohydrin (0.5 moles) was added dropwise to the mixture while stirring at a constantly controlled temperature of 40°C during 40 min. After the addition of the epichlorohydrin was over, the viscosity of reaction mixture began to show an increase and when the value of the Brookfield viscosity of the mixture showed 8 Pa s (8000 cp) one hour after the addition, 119.9 g of aqueous 35% by weight hydrochloric acid solution (corresponding to 1.15 moles) was added to the reaction system of stop poly-condensation. The thus obtained product of polycondensation showed a Brookfield viscosity of 5.2 Pa s (5200 cp) (corresponding to an intrinsic viscosity [η], of 0.90 dl/g) at 25°C.

Example 2

40.0 Grams (0.425 moles) of phenol and 17.1 g (0.075 moles) of bisphenol A were introduced into a separable flask. After adding 141.8 g of an aqueous 50% by weight solution (corresponding to 1.575 moles) of dimethylamine and 127.7 g of an aqueous 37% by weight solution of formaldehyde (corresponding to 1.575 moles) to the flask, the system was kept at 50°C for 5 hours while stirring to carry out Mannich reaction.

Into the thus prepared product of Mannich reaction, 46.3 g (0.5 moles) of epichlorohydrin was added dropwise while keeping the reaction system at 40°C and stirring during 40 min. After the addition was over, the viscosity of the reaction mixture showed a gradual rise to Brookfield viscosity of 7 Pa s (7000 cp) one hour after the addition. At this point, 112.1 g of an aqueous 35% by weight solution of hydrochloric acid (corresponding to 1.075 moles) was added to the reaction mixture to stop polycondensation. The thus obtained polycondensate showed Brookfield viscosity of 4.3 Pa s (4300 cp) at 25°C (intrinsic viscosity, [η], of 0.85 dl/g).

Example 3

32.9 Grams (0.35 moles) of phenol was introduced into a separable flask. After adding 63.0 g of an aqueous 50% by weight solution of dimethylamine (corresponding to 0.7 moles) and 56.8 g of an aqueous 37% by weight solution of formaldehyde (corresponding to 0.7 moles) to the phenol within the flask, the mixture was kept at 55°C for 4 hours while stirring the mixture to carry out a Mannich reaction.

Into another separable flask, 34.2 g (0.15 moles) of bisphenol A was introduced. After adding 40.5 g of an aqueous 50% by weight solution of dimethylamine (corresponding to 0.45 moles) and 36.5 g of an aqueous 37% by weight solution of formaldehyde (corresponding to 0.45 moles) to the bisphenol A within the flask, the mixture was kept at 55°C for 4 hours while stirring the mixture to carry out a Mannich reaction.

Then, both the Mannich reaction products were mixed together, and 46.3 g (0.5 moles) of epichlorohydrin was added dropwise to the mixture while keeping the mixture at 45°C under stirring during 40 mins. 4 Hours after ending the addition of the epichlorohydrin, when the viscosity of the reaction mixture had gradually risen to 9 Pa s (9000 cp) as determined by a Brookfield viscometer, 67.8 g of an aqueous 35% by weight solution of hydrochloric acid (corresponding to 0.65 mole) was added to the reaction mixture to stop polycondensation.

The visocosity of solution of the reaction product was 6.5 Pa s (6500 cp) at 25°C as determined by a Brookfield viscometer, corresponding to an intrinsic viscosity, [η], of 0.99 dl/g.

Example 4

42.3 Grams (0.45 moles) of phenol and 11.4 g (0.05 moles) of bisphenol A were introduced into a separable flask. After adding 99 g of an aqueous 50% by weight solution of dimethylamine (corresponding

to 1.1 moles) and 89.2 g of an aqueous 37% by weight solution of formaldehyde (corresponding to 1.1 moles) to the system of phenol and bisphenol A, the mixture was kept at 55°C for 4 hours while stirring the mixture to carry out a Mannich reaction. To the solution of Mannich reaction products, 46.3 g (0.5 moles) of epichlorhydrin was added dropwise while keeping the reaction mixture at 40°C under stirring during 40 mins. 2 Hours after ending the addition of epichlorohydrin, when the viscosity of the reaction mixture had gradually risen to 8.0 Pa s (8000 cp) as determined by a Brookfield viscometer, 62.6 g (0.6 mole) of an aqueous 35% by weight solution of hydrochloric acid (corresponding to 0.6 mole) was added to the reaction mixture to stop polycondensation.

The viscosity of solution of the reaction product was 3.9 Pa s (3900 cp) at 25°C as determined by a Brookfield viscometer, corresponding to an intrinsic viscosity, [η], of 0.82 dl/g.

Comparative Example

28.2 Grams (0.3 moles) of phenol was introduced into a separable flask. After adding 81.0 g (0.9 moles) of an aqueous 50% by weight solution of dimethylamine and 73.0 g (0.9 moles) of an aqueous 37% by weight solution of formaldehyde (0.9 moles) to the phenol within the flask, the mixture was kept at 55°C for 4 hours while stirring to carry out a Mannich reaction. Into the thus obtained Mannich reaction product, 27.8 g (0.3 moles) of epichlorohydrin was added dropwise during 30 min while keeping the mixture at 40°C under stirring. One hour after the end of the addition of epichlorohydrin by which time the viscosity of the mixture had gradually increased to 8.0 Pa s (8000 cp) as determined by a Brookfield viscometer, 62.6 g (0.6 mole) of an aqueous 35% by weight solution of hydrochloric acid was added to the reaction mixture to stop polycondensation. The viscosity of the thus prepared reaction product was 2.8 Pa s (2800 cp) in a Brookfield viscometer at 25°C., corresponding to an intrinsic viscosity, [η], of 0.80 dl/g.

Example 5

Each of the polycondensates prepared in Examples 1 to 4 and the Comparative Example was diluted with water to form an aqueous solution with a concentration of polymer of 0.5% by weight. After warming to 50°C for a predetermined time period, the amount of polymeric cation in the solution was determined by colloid titration at pH of 4 by using 1/400 N potassium polyvinylsulfate.

The results of the determination are shown in Table 1. The amount of polymeric cation before heating is set at 100.

TABLE 1
Reduction of Amount of Polymeric Cations with Time

| Specimen | After one day | After two days |
|---|---|---|
| Example 1 | 80.7 | 71.8 |
| Example 2 | 75.1 | 67.6 |
| Example 3 | 86.3 | 80.5 |
| Example 4 | 64.3 | 56.2 |
| Comparative Example | 37.5 | 31.9 |

As is seen in Table 1, as a result of addition of the Mannich reaction products of bisphenol A to the component of polycondensate, the reduction of the amount of polymeric cations is clearly suppressed.

Example 6

Two hundred ml of an aqueous 0.5% by weight suspension of bentonite was prepared in a 200 ml volumetric cylinder and after adding each specimen shown in Table 2 to the suspension in the cylinder, the cylinder was turned upside down about ten times to stir the contents. Then the cylinder was allowed to stand for 5 minutes. The tests were repeated with varied amounts of each specimen and the amount of each specimen required to make the liquid in the cylinder clear and transparent was investigated. The amount of the specimen added is shown in Table 2 as the amount of active ingredient in the specimen, namely the polycondensate.

TABLE 2

| Specimen | Amount of addition (mg) |
|---|---|
| Example 1 | 8.0 |
| Example 2 | 8.0 |
| Example 3 | 8.2 |
| Example 4 | 8.4 |
| Comparative Example | 8.3 |
| A commercial product[1)] | 14.6 |

Note: [1)] polycondensate of dimethylamine and epichlorohydrin.

As are seen in Table 2, the product according to the present invention has a flocculating performance nearly equal to that of the product in the Comparative Example.

Example 7

An aqueous solution of 0.5% by weight of each polycondensate obtained by Examples 1 to 4 and the Comparative Example was prepared. the solutions were kept at 50°C for one day. Each polycondensate deteriorated and its amount of polymeric cation was reduced as in Example 5.

The test of Example 6 was repeated using the thus deteriorated polycondensate. The amount of polycondensate required to clarify the suspension was determined. The results are shown in Table 3.

TABLE 3

| Specimen | Amount of addition (mg) |
|---|---|
| Example 1 | 11.0 |
| Example 2 | 12.3 |
| Example 3 | 10.2 |
| Example 4 | 16.4 |
| Comparative Example | 35.8 |

The results of Table 3 show that polycondensates of the present invention in an aqueous solution were more stable than that of the Comparative Example.

**Claims**

1. A polycondensate, suitable for use as a flocculant, of (i) an epihalohydrin, (ii) a reaction product of a monohydric phenol with formaldehyde and a dialkylamine of two to six carbon atoms and (iii) a reaction product of a bisphenol with formaldehyde and a dialkylamine of two to six carbon atoms, the molar ratio of (ii): (iii) being from 90:10 to 50:50.

2. A polycondensate according to claim 1, wherein component (ii) is the reaction product of one part by mole of monohydric phenol with one to three parts by mole of formaldehyde and a substantially equimolar amount, with respect to said formaldehyde, of dialkylamine.

3. A polycondensate according to claim 1 or 2, wherein the component (iii) is the reaction product of one part by mole of bisphenol with one to four parts by mole of formaldehyde and a substantially equimolar amount, with respect to said formaldehyde, of dialkylamine.

4. A polycondensate according to any of the preceding claims, wherein components (ii) and (iii) are

prepared together by reacting the monohydric phenol, bisphenol, formaldehyde and dialkylamine in the ratio represented by the following formulae

$$2X + 2Y \leqq M^1 \leqq 3X + 4Y, \text{ and}$$
$$2X + 2Y \leqq M^2 \leqq 3X + 4Y$$

wherein X, Y, $M^1$ and $M^2$ respectively represent the molar amounts of monohydric phenol, bisphenol, formaldehyde and dialkylamine.

5. A polycondensate according to any one of the preceding claims, wherein the molar amount of epihalohydrin to be reacted is 0.7 to 2.0 times of the sum of the molar amount of the monohydric phenol and of the bisphenol.

6. A polycondensate according to any one of the preceding claims, wherein the epihalohydrin is epichlorohydrin.

7. A polycondensate according to any one of the preceding claims, wherein the monohydric phenol is phenol.

8. A polycondensate according to any one of the preceding claims, wherein the bisphenol is 2,2-bis(4-hydroxyphenyl)propane.

9. A polycondensate according to any one of the preceding claims, wherein the dialkylamine is dimethylamine.

10. A polycondensate according to any one of the preceding claims, wherein the molar ratio of (ii):(iii) is from 85:15 to 50:50.

11. Use of a flocculant of a polycondensate of (i) epichlorohydrin, (ii) a reaction product of phenol with formaldehyde and dimethylamine and (iii) a reaction product of 2,2-bis(4-hydroxyphenyl) propane with formaldehyde and dimethylamine, the molar ratio of (ii):(iii) being from 90:10 to 50:50.

12. A process for flocculating flocculatable substances contained in industrial effluent, which process comprises adding to said effluent an effective amount of a flocculant comprising a polycondensate as claimed in any one of claims 1 to 10.

**Patentansprüche**

1. Polykondensat, das für eine Verwendung als Ausflockungsmittel geeignet ist, aus (i) einem Epihalogenhydrin, (ii) einem Reaktionsprodukt eines einwertigen Phenols mit Formaldehyd und einem Dialkylamin mit 2 bis 6 Kohlenstoffatomen und (iii) einem Reaktionsprodukt aus einem Bisphenol mit Formaldehyd und einem Dialkylamin mit 2 bis 6 Kohlenstoffatomen, wobei das Molverhältnis von (ii):(iii) 90:10 bis 50:50 beträgt.

2. Polykondensat nach Anspruch 1, dadurch gekennzeichnet, daß die Komponente (ii) das Reaktionsprodukt aud 1 Molteil eines einwertigen Phenols mit 1 bis 3 Molteile Formaldehyd und einer im wesentlichen äquimolaren Menge, bezüglich auf Formaldehyd, Dialkylamin ist.

3. Polykondensat nach Anspruch 1 oder 2, dadurch gekennzeichnet, daß die Komponente (iii) das Reaktionsprodukt von 1 Molteil Bisphenol mit 1 bis 4 Molteilen Formaldehyd und einer im wesentlichen äquimolaren Menge, bezogen auf den Formaldehyd, Dialkylamin ist.

4. Polykondensat nach einem der vorhergehenden Ansprüche, dadurch gekennzeichnet, daß die Komponenten (ii) und (iii) zusammen durch Umsetzung des einwertigen Phenols, Bisphenols, Formaldehyds und Dialkylamins in einem durch die folgenden Formeln wiedergegebenen Verhältnis hergestellt werden

$$2X + 2Y \leqq M^1 \leqq 3X + 4Y, \text{ und}$$
$$2X + 2Y \leqq M^2 \leqq 3X + 4Y$$

worin X, Y, $M^1$ bzw. $M^2$ die molaren Mengen an einwertigem Phenol, Bisphenol, Formaldehyd und Dialkylamin bedeuten.

5. Polykondensat nach einem der vorhergehenden Ansprüche, dadurch gekennzeichnet, daß die Molmenge an umzusetzendem Epihalogenhydrin das 0,7- bis 2,0-fache der Summe der Molmenge an einwertigem Phenol und an Bisphenol ist.

6. Polykondensat nach einem der vorhergehenden Ansprüche, dadurch gekennzeichnet, daß das Epihalogenhydrin aus Epichlorhydrin besteht.

7. Polykondensat nach einem der vorhergehenden Ansprüche, dadurch gekennzeichnet, daß das einwertige Phenol aus Phenol besteht.

8. Polykondensat nach einem der vorhergehenden Ansprüche, dadurch gekennzeichnet, daß das Bisphenol aus 2,2-Bis(4-hydroxyphenyl)propan besteht.

9. Polykondensat nach einem der vorhergehenden Ansprüche, dadurch gekennzeichnet, daß das Dialkylamin aus Dimethylamin besteht.

10. Polykondensat nach einem der vorhergehenden Ansprüche, dadurch gekennzeichnet, daß das Molverhältnis von (ii):(iii) zwischen 85:15 und 50:50 liegt.

11. Verwendung eines Polykondensats aus (i) Epichlorhydrin, (ii) einem Reaktionsproduckt aus Phenol mit Formaldehyd mit Dimethylamin und (iii) einem Reaktionsprodukt von 2,2-Bis(4-hydroxyphenyl)propan mit Formaldehyd und Dimethylamin, wobei das Molverhältnis von (ii):(iii) 90:10 bis 50:50 beträgt, als Ausflockungsmittel.

12. Verfahren zum Ausflocken von ausflockbaren Substanzen, die in industriellen Abströmen enthalten sind, dadurch gekennzeichnet, daß dem Abstrom eine wirksame Menge eines Ausflockungsmittels aus einem Polykondensat gemäß einem der Ansprüche 1 bis 10 zugesetzt wird.

**Revendications**

1. Polycondensat, utilisable en tant que floculant, (i) d'une épihalohydrine, (ii) d'un produit de réaction d'un phénol monohydrique avec du formaldéhyde et une dialkylamine de 2 à 6 atomes de carbone et (iii) d'un produit de réaction d'un bisphénol avec du formaldéhyde et une dialkylamine de 2 à 6 atomes de carbone, le rapport molaire de (ii):(iii) étant compris entre 90:10 et 50:50.

2. Polycondensat selon la revendication 1 dans lequel le composant (ii) est le produit de réaction d'une partie en mole de phénol monohydrique avec une à trois parties en mole de formaldéhyde et une quantité essentiellement équimoléculaire par rapport audit formaldéhyde, de dialkylamine.

3. Polycondensat selon la revendication 1 ou 2, dans laquel le composant (iii) est le produit de réaction d'une partie en mole de bisphénol avec une à quatre parties en mole de formaldéhyde et une quantité essentiellement équimoléculaire par rapport audit formaldéhyde, de dialkylamine.

4. Polycondensat selon l'une quelconque des revendications précédentes, dans lequel les composants (ii) et (iii) sont préparés ensemble en faisant réagir le phénol monohydrique, le bisphénol, le formaldéhyde et la dialkylamine dans le rapport représenté par les formules suivantes:

$$2X + 2Y \leqq M^1 \leqq 3X + 4Y, \text{ et}$$
$$2X + 2Y \leqq M^2 \leqq 3X + 4Y$$

dans lesquelles X, Y, $M^1$ et $M^2$ représentent respectivement des quantités molaires de phénol monohydrique, de bisphénol, de formaldéhyde et de dialkylamine.

5. Polycondensat selon l'une quelconque des revendications précédentes, dans lequel la quantité molaire d'épihalohydrine mise à réagir est de 0,7 à 2 fois la somme de la quantité molaire de phénol monohydrique et de bisphénol.

6. Polycondensat selon l'une quelconque des revendications précédentes, dans lequel l'épihalohydrine est l'épichlorhydrine.

7. Polycondensat selon l'une quelconque des revendications précédentes, dans lequel le phénol monohydrique est le phénol.

8. Polycondensat selon l'une quelconque des revendications précédentes, dans lequel le bisphénol est le 2,2-bis(4-hydroxy-phényl)propane.

9. Polycondensat selon l'une quelconque des revendications précédentes, dans lequel la dialkylamine est la diméthylamine.

10. Polycondensat selon l'une quelconque des revendications précédentes, dans lequel le rapport molaire de (ii):(iii) est de 85:15 à 50:50.

11. Utilisation en tant que floculant d'un polycondensat (i) d'épichlorhydrine(ii) d'un produit de réaction de phénol avec du formaldéhyde et de la diméthylamine et (iii) un produit de réaction du 2,2-bis(4-hydroxyphényl)propane avec du formaldéhyde et de la diméthylamine, le rapport molaire de (ii):(iii) étant de 90:10 à 50:50.

12. Procédé pour floculer des substances floculables dans les effluents industriels, ce procédé consistant à ajouter audit effluent une quantité efficace d'un floculant comprenant un polycondensat tel que revendiqué selon l'une quelconque des revendications 1 à 10.